**Europäisches Patentamt**

**European Patent Office**

**Office européen des brevets**

(19)

(11) Veröffentlichungsnummer: **0 140 366**
**B1**

(12) # EUROPÄISCHE PATENTSCHRIFT

(45) Veröffentlichungstag der Patentschrift:
09.08.89

(51) Int. Cl.⁴: **B 60 R 22/36**

(21) Anmeldenummer: 84113051.1

(22) Anmeldetag: 30.10.84

(54) Aufwickelvorrichtung für Sicherheitsgurte.

(30) Priorität: 02.11.83 DE 3339527

(43) Veröffentlichungstag der Anmeldung:
08.05.85 Patentblatt 85/19

(45) Bekanntmachung des Hinweises auf die Patenterteilung: 09.08.89 Patentblatt 89/32

(84) Benannte Vertragsstaaten:
FR GB IT SE

(56) Entgegenhaltungen:
FR–A– 2 452 941
FR–A– 2 481 604
GB–A– 2 090 119
US–A– 3 941 330

(73) Patentinhaber: AUTOFLUG GMBH
Industriestrasse 10 Postfach 1180
D-2084 Rellingen (DE)

(72) Erfinder: Singer, Klaus-Peter
Mildestieg 25
D-2000 Hamburg 60 (DE)

(74) Vertreter: Müller, Karl-Ernst, Dr. et al
Patentanwälte Becker, Müller & Pust Eisenhüttenstrasse 2
D-4030 Ratingen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 140 366 B1

# Beschreibung

Die Erfindung betrifft eine Aufwickelvorrichtung für Sicherheitsgurte, insbesondere in Kraftfahrzeugen, mit einer Einrichtung zum selbsttätigen Blockieren einer Gurtaufwickelwelle bei grenzwertüberschreitenden Beschleunigungen am Gurtband und/oder Vorrichtungsträger, wobei ein exzentrisch an der Gurtaufwickelwelle gelagertes und radial zum Eingriff in eine gehäusefeste Verzahnung ausschwenkbares Sperrglied mit wenigstens einem Sperrzahn mit einem in die Ebene des Sperrgliedes reichenden Ansatz der Gurtaufwickelwelle in der ausgeschwenkten Blockierstellung zusammenwirkt.

Derartige Aufwickelvorrichtungen für Sicherheitsgurte sind beispielsweise aus der DE-A-30 49 564 sowie DE-A- 30 17 097 bekannt.

Die Funktionstüchtigkeit der bekannten Aufwickelvorrichtungen im Belastungsfall hängt im wesentlichen von der Form der Sperrteile des Sperrgliedes, dem Überdeckungsgrad mit den gehäusefesten Rastelementen und der Radialkraft an der Verzahnung ab.

Die Forderungen der Automobilindustrie hinsichtlich der Blockiereinrichtungen gehen heute dahin, diese in möglichst kleiner und kompakter Ausführung zur Verfügung zu stellen, um sie platzsparend im Fahrzeug unterzubringen.

Die vorstehend genannten Kriterien für die Funktionstüchtigkeit derartiger Blockiervorrichtungen werden jedoch mit kleinerer und leichterer Bauweise sehr viel ungünstiger. Kommt nämlich die Verzahnung gegenüber der Auszugsrichtung des Gurtbandes im Belastungsfall zum Eingriff, so nimmt der Überdeckungsgrad der Sperrteile, insbesondere Sperrzähne des Sperrgliedes, mit den gehäusefesten Rastelementen naturgemäß mit zunehmender Belastung ab, unter anderem, weil die Gurtaufwickelwelle bei besonders hohen Belastungen nicht lagestabil bleibt, sondern durch Verschieben oder Deformation ihre Position ändert, wodurch es zu einem immer geringeren Überdeckungsgrad mit den gehäusefesten Rastelementen und schließlich zu einem Verrutschen der Rasteinrichtungen gegenseitig kommen kann.

Die Aufwickelvorrichtung kann dann eine ihrer wesentlichen Aufgahen, eine sichere Gurtblockierung im Belastungsfall zu schaffen, nicht mehr erfüllen.

Der Erfindung liegt die Aufgabe zugrunde, eine Aufwickelvorrichtung für Sicherheitsgurte zur Verfügung zu stellen, die auch hei extrem hohen Belastungen, beispielsweise im Crash-Fall, eine sichere Blockierung des Sicherheitsgurtes ermöglicht und ein Abrutschen des Sperrgliedes in Bezug auf die gehäusefesten Rastelemente zuverlässig verhindert.

Die erfindungsgemäße Lösung dieser Aufgabe wird durch die Merkmale des Patentanspruches 1 gegeben. Vorteilhafte Ausgestaltungen und Weiterbildungen derselben ergeben sich aus dem Inhalt der Unteransprüche.

Durch die erfindungsgemäße Anordnung einer Sollbruchstelle im Sperrglied werden innerhalb der Blockiervorrichtung neue Kräfte freigesetzt, die spontan zu einer Defomierung zumindest eines Teils der Gurtaufwickelwelle oder der Wellenlagerung führen, wobei sich die Welle in Bezug auf den gehäusefesten Druckring (Rastelement) bewegt, bis sie gegen die gehäusefesten Rastelemente direkt bzw. indirekt gedrückt wird. Falls dos Wellenlager entsprechend breit dimensioniert ist, ist die axiale Verlagerung der Gurtaufwickelwelle durch eine entsprechende Deformation des Lagers erzielbar.

Aus der US-A-3 941 330 ist es bekannt, bei einem Gurtaufroller die Welle in den zugeordneten Schenkeln des Gehäuses so zu lagern, daß unter Belastung sich die Welle mit ihrem Lager von dem Gehäuse trennt und radial in ihre Blockierlage verlagert wird; hierzu ist in dem die Welle tragenden Gehäuse eine Sollbruchstelle angeordnet. Bei dem bekannten Gegenstand findet aber ein anderes Blockierprinzip Anwendung, und weiterhin ist die Lagerung der Welle nach deren Belastung zerstört.

Zur weiteren Sicherung des Blockierens der Vorrichtung sieht die Erfindung dann zwei alternative Lösungsvorschläge vor.

Der eine besteht darin, daß der Ansatz in eine vorzugsweise wenigstens zwei verschiedene Funktionsstellungen zulassende Mittenöffnung des Sperrgliedes eingreift und das 'Sperrglied auf seiner Umfangsfläche im Bereich zwischen der Sollbruchstelle und dem mindestens einen Sperrzahn, in Gurtauszugsrichtung gesehen, im Abstand zur ersten Sperreinrichtung mindestens einen weiteren Sperrzahn aufweist, der mit den gehäusefesten Rastelementen nach Auftrennung des Sperrgliedes verriegelbar ist. Bei diesem Lösungsvorschlag wird also die zumindest partielle Deformation der Gurtaufwickelwelle, auf der das Sperrglied gelagert ist, bzw. ihrer Lagerung ausgenutzt, indem der starre Ansatz der Gurtaufwickelwelle den mit mindestens einem weiteren Sperrzahn versehenen, mit dem übrigen Sperrglied nur noch über eine Verbindungsstelle verbundenen Teil gegen die gehäusefesten Rastelemente drückt und so eine zweite Verriegelungs- oder Rastposition im Abstand zu ersten, an sich bekannten Verriegelung schafft.

Durch zwei, im Abstand zueinander angeordnete Verriegelungen des Sperrgliedes mit den gehäusefesten Rastelementen wird eine absolut zuverlässige und sichere Blockierung der Vorrichtung erreicht.

Der zweite Lösungsvorschlag geht dahin, daß der Ansatz der Gurtaufwickelwelle eine im Lagerungsbereich des Sperrgliedes befindliche Öffnung oder Durchbrechung aufweist, in der oder durch die das Sperrglied geführt ist, wobei die seitlichen Stege im Bereich der Öffnung oder der Durchbrechung vorzugsweise als Anlageflächen für das Sperrglied in dessen Verriegelungsstellung vorgesehen sind und das Sperrglied seine Sollbruchstelle auf dem Teil aufweist, der dem Teil, auf dem der wenigstens eine Sperrzahn angeordnet ist, gegenüberliegt.

Auch bei dieser Lösung kommt es zunächst in bekannter Weise zu einem Einrasten des Sperrgliedes mit mindestens einem Sperrzahn in die gehäusefesten Rastelemente. Wird jedoch die Belastung innerhalb der Vorrichtung so groß, daß die vorgegebene Festigkeit der Sollbruchstelle überschritten wird, so bricht vor einem Abrutschen des Sperrgliedes seine Sollbruchstelle und bewirkt ein Wandern der Welle durch Verformung der Wellenummantelung und/oder -lagerung, bis das starre Kernelement der Welle bzw. der Ansatz einen Anlagepunkt an der gehäusefesten Rastverzahnung gefunden hat. Auf diese Weise wird ebenso eine zweite Verriegelungsposition geschaffen, die in diesem Fall durch das starre Kernelement, das vorzugsweise mit dem Ansatz der Welle einstückig ist, gebildet wird. Die aufnehmbare Bruchlast erhöht sich erfindungsgemäß bei beiden Lösungsvorschlägen dadurch, daß eine zusätzliche Verriegelung mit der gehäusefesten Rastverzahnung erreicht wird.

In der Zeichnung sind nachfolgend einige Ausführungsbeispiele einer erfindungsgemäßen Aufwickelvorrichtung mit Blockiereinrichtung dargestellt. Dabei zeigen :

Fig. 1 einen Längsschnitt — zum Teil schematisch — durch eine erfindungsgemäße Aufwickelvorrichtung mit einer Blockiereinrichtung längs der Achse der Gurtaufwickelwelle,

Fig. 2 einen Querschnitt durch eine Blockiereinrichtung der Aufwickelvorrichtung in der Ebene des Sperrgliedes in Verriegelungsstellung,

Fig. 3 die Darstellung gemäß Figur 2, nachdem das Sperrglied an seiner Sollbruchstelle gebrochen ist.

Fig. 4 ein anderes Ausführungsbeispiel in einer Ansicht und 5 gemäß Figuren 3, 4 in derselben Ansicht vor bzw. nachdem die Sollbruchstelle des Sperrgliedes gebrochen ist.

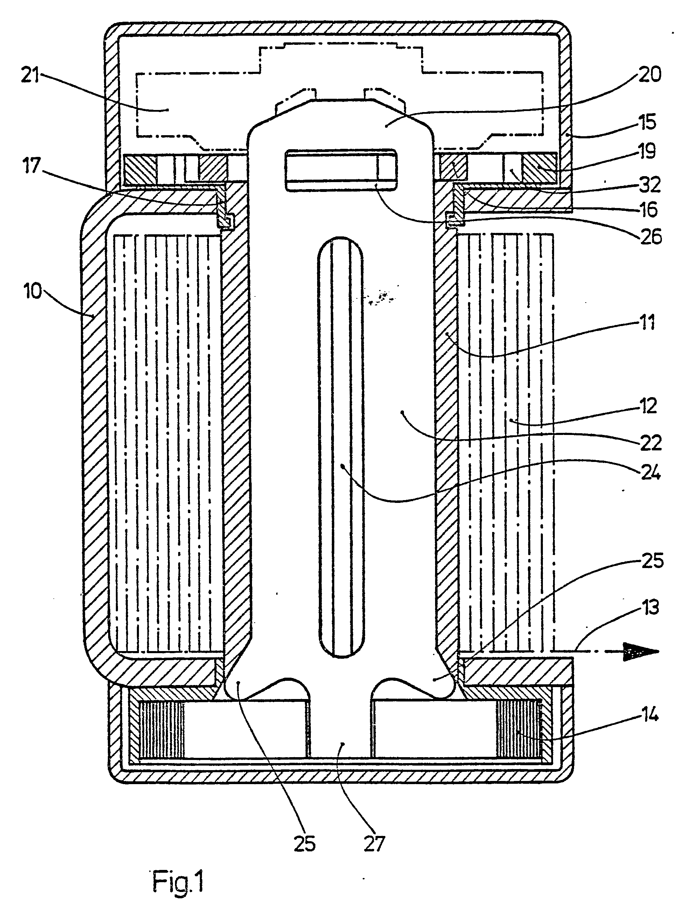

Aus Figur 1 ist der grundsätzliche Aufbau einer Aufwickelvorrichtung zu entnehmen. In einem U-förmigen Gehäuse 10 ist eine Gurtaufwickelwelle 11 gelagert, auf die das Gurtband 12 des Sicherheitsgurtes in mehreren Lagen aufspulbar ist. Zum Anlegen des Gurtes zieht die betreffende Person das Gurtband in herkömmlicher Weise aus der Aufwickelvorrichtung heraus, in Figur 1 durch den Pfeil 13 dargestellt, wobei es sich von der Welle 11 abwickelt und diese dabei gegen die Kraft einer Rückspulfeder 14 in Umdrehungen versetzt.

Auf der sogenannten Systemseite, welche der Seite der Aufwickelvorrichtung gegenüberliegt, in der die Rückspulfeder 14 angeordnet ist, sind unter einer Abdeckung 15 die Bauteile untergebracht, welche die Blockierung der Gurtaufwickelwelle 11 hervorrufen und damit das Rückhaltesystem wirksam machen, indem das Gurtband 12 nicht mehr in Pfeilrichtung 13 aus der Vorrichtung herausziehbar ist. Die Auslösung der Wellenblockierung kann in herkömmlicher Weise entweder gurtband- und/oder fahrzeugsensitiv erfolgen. Hierbei rastet ein Sperrglied 16 mit Sperrzähnen 37 in die Zähne 32 eines innenverzahnten Druckringes 19 ein, der fest mit dem Gehäuse 10 verbunden ist. Das Sperrglied 16 ist als eine aus Stahlblech ausgestanzte Scheibe ausgebildet und steht auf noch zu beschreibende Weise mit einem Ansatz 20 der Gurtaufwickelwelle 11 in einer solchen Verbindung, daß im Blockierungsfall eine Kraftschlußkette vom Druckring 19 über das Sperrglied 16 zum Ansatz und damit zur Welle 11 geschlossen wird.

Die Steuerung des Sperrgliedes 16 erfolgt ebenfalls in herkömmlicher Weise über ein Trägheitselement mit einer g-Wert-Feder und/oder ein fahrzeugsensitives System, z. B. Kugelsensor, und ist in Figur 1 schematisch mit der Bezugsziffer 21 dargestellt.

Die Gurtaufwickelwelle 11 besteht im dargestellten Ausführungsbeispiel aus einem Stahlkern 22, der in einen trommelartigen Profilkörper 23 aus Kunststoff eingelagert ist. Der Stahlkern 22 hat eine im wesentlichen langgestreckte O-Form und weist in seinem, in den Systemteil hineinragenden Ansatz 20 eine in der Ebene der öffnung 24 der O-Form liegende Durchbrechung 26 auf.

Die Öffnung 24 im Stahlkern 22 dient zum Festlegen des Gurtbandendes an der Gurtaufwickelwelle 11. Auf der Seite der Rückspulfeder 14 ist das dortige Ende des Stahlkernes 22 schwalbenschwanzförmig mit ungefähr dreieckigen Fortsätzen 25 gestaltet, die bei dem Ausführungsbeispiel gemäß Figur 1 über die Breite des Stahlkernes 22 hinausragen. In der Mitte zwischen den Fortsätzen 25 ist axial einstückig ein Mitnehmerzapfen 27 für die Rückspulfeder 14 angeordnet.

Der auf der Systemseite der Vorrichtung befindliche Ansatz 20 des Stahlkernes 22 geht einstückig in diesen über, es sind jedoch auch Ausführungsbeispiele möglich, bei denen der Ansatz 20 als ursprünglich getrenntes Bauteil fest mit der Gurtaufwickelwelle 11 verbunden ist. Auch in diesem Fall muß dann aber eine absolut sichere Verankerung des Ansatzes 20 in der Gurtaufwickelwelle 11 gewährleistet sein.

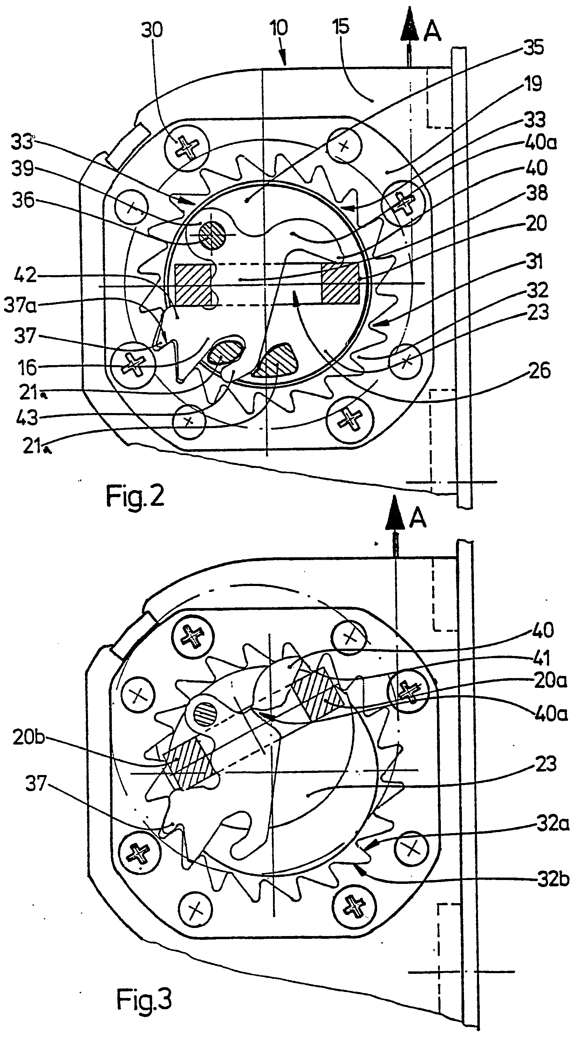

In Figur 2 ist nun ein Querschnitt durch den Systemteil einer erfindungsgemäßen Aufwickelvorrichtung in der Ebene des Sperrgliedes 16 dargestellt.

Mit dem Gehäuse 10 bzw. der Abdeckung 15 ist über Verschraubungen 30 der Druckring 19 verbunden, der eine Innenverzahnung 31 aufweist. Die Innenverzahnung 31 ist auf einer Kreisfläche angeordnet und weist symmetrisch aneinandergereihte Rastzähne 32 auf. Die Rastzähne 32 sind derart gestaltet, daß sie jeweils eine nahezu radial verlaufende Fläche 32a aufweisen, die als Kontaktfläche für Zähne 37 des Sperrgliedes dient, während die andere Zahnschulter 32b zwischen einer axialen und tangentialen Position verläuft.

Der Stahlkern 22 erstreckt sich durch die Öffnung 33 des Druckringes 19, während der übrige Teil der Gurtaufwickelwelle 11, nämlich der Profilkörper 23, sich bis kurz vor den Druckring 19 erstreckt.

Die Durchbrechung 26 des den Ansatz 20 bildenden Teils des Stahlkernes 22 im Systemteil der Vorrichtung wird vom Sperrglied 16 durchgriffen. Die Form des Sperrgliedes 16 ist so gewählt, daß es einen gegenüber den freien Enden verjüngten Mittelteil 38 aufweist, wobei dieser Mittelteil 38 eine Bauhöhe aufweist, die etwas geringer als die der Durchbrechung 26 (in Richtung der Längsachse der Gurtaufwickelwelle 11 gesehen) ist, während die Breite des Mittelteils 38 deutlich geringer als die Breite der Durchbrechung 26 ist, so daß das Sperrglied 16 insgesamt schwenkbeweglich in der Durchbrechung 26 geführt werden kann, wie noch näher beschrieben wird.

Die Grundfläche der Durchbrechung 26 sowie die korrespondierende Endfläche des Profilkörpers 23 liegen etwa in einer Ebene, so daß das Sperrglied 16 sowohl im Bereich der Durchbrechung 26 als auch mit den diese überragenden Enden auf dem Profilkörper 23 bzw. der Grundfläche der Durchbrechung 26 aufliegt.

Auf einer Seite der Durchbrechung 26 bzw. des Ansatzes 20 ist das Sperrglied 16 über einen fest mit dem Sperrglied 16 verbundenen Stift 36, der in eine korrespondierende Ausnehmung auf der Fläche 35 des Profilkörpers 23 eingreift, schwenkbeweglich gelagert. In diesem Bereich weist das Sperrglied 16 einen Ansatz 39 auf. Von diesem Ansatz 39, der zumindest zu seinem größeren Teil außerhalb einer gedachten Verlängerung der Durchbrechung 26 liegt, verläuft ein hakennasenförmiger Ansatz 40, dessen Hals 40a verjüngt gestaltet ist. Das freie Ende der Hakennase 40 ist so gestaltet, daß es auf der Außenfläche 41 des seitlichen Steges des Ansatzes 20 in der Verriegelungsstellung anliegt (Fig. 1).

Auf dem anderen, die Durchbrechung 26 überragenden Ende ist das Sperrglied 16 mit zwei Armen 42, 43 ausgestattet, die unterschiedliche, aufeinander zuweisende Krümmungen besitzen. Dabei ist der zur Seite der Zapfenlagerung des Sperrgliedes 16 hin angeordnete Arm 42 mit zwei Rastzähnen 37 versehen, deren Form so gewählt ist, daß sie zwischen die durch die Rastzähne 32 des Druckringes 19 gebildeten Zahnlücken bündig eingreifen können.

Die Verbindung des Sperrgliedes 16 zum fahrzeugund/oder gurtbandsensitiven System erfolgt durch ein Trägheitselement 21, das mit seinen beiden Zapfen 21a an dem Arm 43 des Sperrgliedes 16 angreift.

Die Befestigung dieses letztgenannten Systems geschieht durch achsparallele Fortsätze des aus Kunststoff bestehenden trommelförmigen Wellenteils, in dessen Mitte der Stahlkern 22 eingelagert ist. In Figur 2 ist die Blockiereinrichtung der Aufwickelvorrichtung in einer Stellung dargestellt, bei der das Sperrglied 16 bereits in die Rastelemente 32 des Druckringes 19 eingreift, und zwar mittels seiner beiden Zähne 37. Dabei liegen die Zähne 37 mit ihren radial verlaufenden Flächen 37a unmittelbar gegen die ebenfalls radial verlaufenden Flächen 32a der Rastzähne 32 an. Mit zunehmender Belastung kommt es jedoch zu einer Deformation des Profilkörpers 23, womit gleichzeitig eine Verschiebung der Zähne 37 in den Rastelementen des Druckringes 19 verbunden ist. Diese Verschiebung kann alternativ oder kumulativ auch durch eine Deformation der Wellenlagerung, bspw. bei Verwendung einer reinen Metallwelle, hervorgerufen werden. Allerdings muß .die deformierbare Lagerung dann entsprechend dick ausgebildet sein.

Der Überdeckungsgrad nimmt dann mit zunehmender Belastung ab, weil sich der Profilkörper 23 aus Kunststoff bzw. die Lagerung verformt und die Gurtaufwickelwelle 11 mit dem Sperrglied 16 in Auszugsrichtung (durch Pfeil A dargestellt) wandert.

Wird nun die Belastung so groß, daß der Überdeckungsgrad zwischen den Zähnen 37 und den Rastzähnen 32 immer kleiner wird, so bricht vor einem Abrutschen des Sperrgliedes 16 die Hakennase 40 an ihrem Hals 40a ab, wodurch die Gurtaufwickelwelle durch Verformung des Kunststoff-Profilkörpers 23 bzw. der Wellenlagerung 17 weiter in Richtung der Gurtauszugsrichtung A wandert, bis der Stahlkern 22 bzw. der Ansatz 20 mit seiner Fläche 41, gegen die zuvor noch die Hakennase 40 anlag, gegen einen Zahn 32 des Druckringes 19 zur Anlage kommt. Auf diese Art und Weise wird eine zu der Verriegelung über die Zähne 37 zusätzliche Verriegelung erreicht, wobei der starre Ansatz 20 des Stahlkernes 22 zur Aufnahme einer erheblichen mechanischen Belastung in der Lage ist. Die Bruchlast der Vorrichtung erhöht sich dadurch in erheblichem Umfang. Die Sicherheit einer derartigen erfindungsgemäßen Vorrichtung ist damit gegenüber konventionellen Aufwickelvorrichtungen deutlich erhöht.

In Abhängigkeit von den jeweiligen Einsatzbedingungen kann diejenige Bruchlast vorbestimmt werden, zu der das Sperrglied 16 an seiner Sollbruchstelle 40a abbricht. Hierbei kommt es unter anderem auf die Festigkeitsparameter der deformierbaren Profilkörper 23 und/oder des Wellenlagers 17, des Stahlkernes 22, des Druckringes 19 und des Sperrgliedes 16 sowie auf die jeweilige Form der Innenverzahnung 31 sowie der Zähne 32, 37 des Druckringes 19 bzw. des Sperrgliedes 16 an.

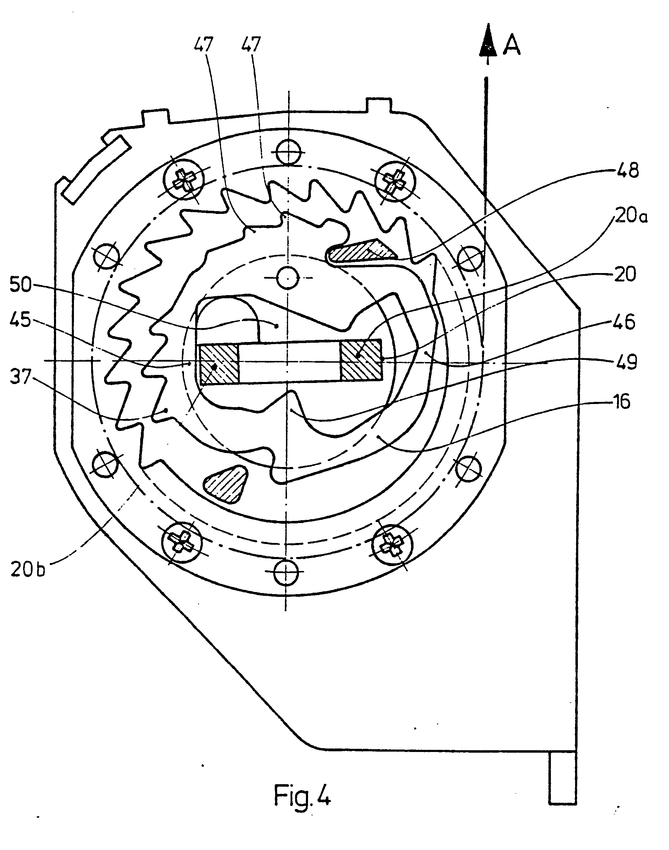

In Figur 4 ist ein weiteres Ausführungsbeispiel einer erfindungsgemäßen Aufwickelvorrichtung dargestellt, wobei auch hier eine Querschnittsdarstellung in der Ebene des Sperrgliedes gezeigt ist.

Während die Gurtaufwickelwelle 11 in gleicher Weise wie in den Figuren 2 und 3 aus einem Kunststoff-Profilkörper 23 und einem mittig darin geführten Stahlkern 22 mit einem Ansatz 20 besteht, ist das Sperrglied 16 in diesem Ausführungsbeispiel in Ringform ausgebildet.

Insoweit stellt dieses Ausführungsbeispiel eine abgewandelte Ausführungsform einer Aufwickelvorrichtung im Sinne der Erfindung dar, weil hier — entgegen dem Ausführungsbeispiel gemäß Figur 2 und 3 — nicht das Sperrglied 16 durch den Ansatz 20 greift, sondern genau umgekehrt der Ansatz 20 durch das Sperrglied 16.

Dabei weist das Sperrglied 16 auf einem Teil 45 seiner Umfangsfläche Zähne 37 auf, und zwar hier drei Stück. Auf der den Zähnen 37 gegenüberliegenden Seite ist das Sperrglied 16 mit einem verjüngten Teil 46 ausgebildet, das die Sollbruchstelle bildet.

Auf dem Teilbereich zwischen dem verjüngten Teil 46 (also der Sollbruchstelle) und den Zähnen 37 (entgegen dem Uhrzeigersinn gesehen) sind auf der Umfangsfläche des Sperrgliedes 16 drei weitere Zähne 47 ausgebildet, deren Funktion nachfolgend noch näher beschrieben wird.

Beim Belastungsfall werden die Schenkel 20a, 20b des Ansatzes 20 gegen die korrespondierenden, inneren Anschlagflächen des Sperrgliedes 16 geführt, und dieses wird aufgrund seiner exzentrischen Lagerung über einen Zapfen 48 an dem Trägheitselement 21 mit seinen Zähnen 37 in die Innenverzahnung 31 des Druckringes 19 geführt, so daß es zu einer Blockierung der Gurtaufwickelvorrichtung kommt. Wird nun aber die aufzunehmende Belastung noch größer, so kommt es auch hier, wie anhand des Ausführungsbeispieles gemäß Figuren 2 und 3 beschrieben, zu einer Deformation des Profilkörpers 23, der in Richtung der Gurtauszugsrichtung A sich verschiebt und/oder der Wellenlagerung 17, wobei der Überdeckungsgrad der Zähne 37 in der Innenverzahnung 31 immer geringer wird. Bevor jedoch die Zähne 37 aus der Innenverzahnung 31 herausgeführt werden, aufgrund der fortschreitenden Deformation und Verschiebung der Gurtaufwickelwelle 11 bzw. deren Lagerung, bricht das Sperrglied 16 an der Sollbruchstelle 46, wodurch das ringförmige Sperrglied 16 aufgebrochen wird. Aufgrund der vom Ansatz 20 über die Fläche des Schenkels 20a auf die korrespondierende Fläche des Sperrgliedes 16 übertragene Belastung wird der jetzt einseitig aufgebrochene und damit freie Teil des Sperrgliedes 16 gegen die Innenverzahnung 31 geführt, bis er mit seinen Zähnen 47 dort einrastet.

Auf diese Weise wird dann eine zusätzliche Verriegelungsmögleitkeit geschaffen, die sicherstellt, daß das Gurtband auch bei weiterer Belastung sicher blockiert wird.

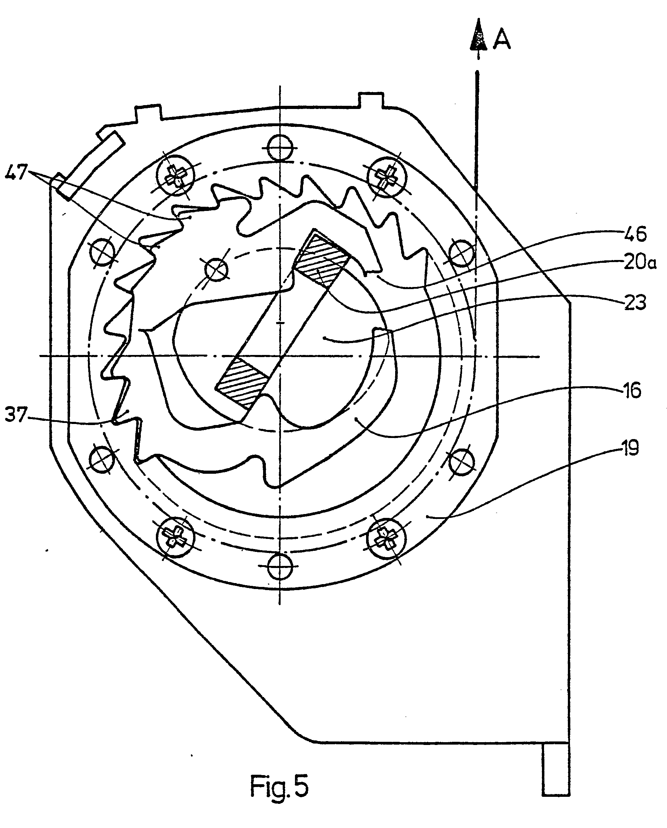

Die dabei von den einzelnen Teilen der Blockiereinrichtung eingenommenen Positionen sind in Figur 5 dargestellt.

Wie im Ausführungsbeispiel gemäß Figuren 4 und 5 dargestellt, ist die Innenfläche des ringförmigen Sperrgliedes 16 an ihren einander gegenüberliegenden Längsseiten mit einstückig angeformten Vorsprüngen oder Nocken 49 ausgebildet, die so weit in den Lichtraum der Öffnung 50 des Sperrgliedes 16 hineinragen, daß sie sich beim Ausschwenken des Sperrgliedes 16 in die Blockierstellung von der jeweiligen Seite her mit einem gewissen Teil ihrer Fläche in den querschlitzartigen Durchbruch 26 hineinverlagern. Auf diese Weise ergibt sich eine zusätzliche Sperrung bzw. Verriegelung des Sperrgliedes 16 an der Gurtaufwickelwelle 11 mit ihrem Ansatz 20, womit die Wirkung verbunden ist, daß das Sperrglied 16 seine vorbestimmte Stellung im Verhältnis zum Ansatz 20 in Richtung der Wellenachse nicht verlassen kann. Die Erfindung entfaltet ihre Wirkung aber auch, wenn im Ansatz 20 keine Durchbrechung 26 oder eine entsprechende Öffnung vorgesehen ist.

Erfindungsgemäß ist vorgesehen, daß die Aufwickelwelle 11 ein stark deformierbares Lager und/oder eine stark deformierbare Ummantelung aufweist, während der Wellenkern selbst als ein tragendes, bruchfestes Bauteil ausgebildet ist. Die Ummantelung der Welle kann, wie in den Ausführungsbeispielen dargestellt, beispielsweise als Kunststoffteil ausgebildet sein, es ist beispielsweise auch denkbar, Kunstharze oder Gummimischungen zu verwenden. Wesentlich ist nur, daß das Material ab einer bestimmten Belastung deformierbar ist.

Der mechanisch hochfeste Wellenkern, der in den Ausführungsbeispielen durch den Stahlkern 22 gebildet wird, sichert über den Ansatz 20, daß hohe mechanische Belastungen auf die Innenverzahnung 31 (Ausführungsbeispiel gemäß Figuren 2 und 3) bzw. über den aufgebrochenen Teil des Sperrgliedes 16 auf die Innenverzahnungen 31 (Ausführungsbeispiel gemäß Figuren 4 und 5) übertragen werden können.

Besonders vorteilhaft macht sich die Sollbruchstelle immer dann bemerkbar, wenn die Blockierung gegenüber der Gurtbandauszugsrichtung erfolgt, wie dies auch in den Ausführungsbeispielen dargestellt ist. Ein weiterer Vorteil der Erfindung ergibt sich daraus, daß naben der zweifachen Blockierung des Sperrgliedes auch eine absolut sichere Erkennung der weiteren Funktionstüchtigkeit des Gurtaufrollers für den Benutzer möglich ist. Ist nämlich im Crash-Fall das Sperrglied an der Sollbruchstelle gebrochen, so kann der Gurtaufroller das Gurtband anschließend nicht mehr auf- bzw. abspulen. Die Vorrichtung kann dann zur Reparatur weggebracht werden.

## Patentansprüche

1. Aufwickelvorrichtung für Sicherheitsgurte, insbesondere in Kraftfahrzeugen mit einer Einrichtung zum selbsttätigen Blockieren einer Gurtaufwickelwelle (11) bei grenzwertüberschreitenden Beschleunigungen am Gurtband (12) und/oder Vorrichtungträger, wobei ein exzentrisch an der Gurtaufwickelwelle (11) gelagertes und radial zum Eingriff in eine gehäusefeste Verzahnung (32) ausschwenkbares Sperrglied (16) mit wenigstens einem Sperrzahn (37) mit einem in die Ebene des Sperrgliedes (16) reichenden Ansatz (20) der Gurtaufwickelwelle (11) in der ausgeschwenkten Blockierstellung zusammenwirkt, dadurch gekennzeichnet, daß das Sperrglied (16) mindestens eine Sollbruchstelle (40a, 46) aufweist und die Gurtaufwickelwelle (11) und/oder deren Lagerung (17) für mechanische Belastungen im Bereich der Festigkeitsgrenze der Sollbruchstelle (40a, 46) des Sperrgliedes (16) partiell deformierbar ausgebildet ist.

2. Vorrichtung nach Anspruch 1, dadurch gekennzeichnet, daß die Gurtaufwickelwelle (11) aus einem deformierbaren Profilkörper (23) auf einem starren Kernelement (22) aufgebaut ist.

3. Vorrichtung nach Anspruch 1 oder 2, dadurch gekennzeichnet, daß der Profilkörper (23) aus Kunststoff und das Kernelement (22) aus Metall bestehen.

4. Vorrichtung nach einem der Ansprüche 1-3, dadurch gekennzeichnet, daß der Ansatz (20) in eine Mittenöffnung (50) des Sperrgliedes (16) eingreift und das Sperrglied (16) auf seiner Umfangsfläche im Bereich zwischen der Sollbruchstelle (46) und dem mindestens einen Sperrzahn (17) in Gurtauszugsrichtung gesehen im Abstand zur ersten Sperreinrichtung mindestens einen weiteren Sperrzahn (47) aufweist, der mit dem gehäusefesten Rastelement (19, 31) nach Auftrennung der Sollbruchstelle (46) des Sperrgliedes (16) zusätzlich verriegelbar ist.

5. Vorrichtung nach einem der Ansprüche 1-3, dadurch gekennzeichnet, daß der Ansatz (20) der Gurtaufwickelwelle (11) eine im Lagerungsbereich des Sperrgliedes (16) befindliche Öffnung oder Durchbrechung (26) aufweist, in der oder durch die das auf dem Profilkörper (23) exzentrisch gelagerte Sperrglied (16) geführt ist.

6. Vorrichtung nach Anspruch 5, dadurch gekennzeichnet, daß das Sperrglied (16) seine Sollbruchstelle (40a) auf dem Teil aufweist, der dem Teil, auf dem der wenigstens eine Sperrzahn (37) angeordnet ist, gegenüberliegt.

7. Vorrichtung nach einem der Ansprüche 1-6, dadurch gekennzeichnet, daß die seitlichen Schenkel (20a, 20b) des Ansatzes (20) Anlageflächen für das Sperrglied (16) in dessen Verriegelungsstellung aufweisen.

8. Vorrichtung nach einem der Ansprüche 1-7, dadurch gekennzeichnet, daß das Kernelement (22) ein Stahlkern mit einem langezogenen O-Profil ist, das in den deformierbaren Profilkörper (23) der Gurtaufwickelwelle (11) achssymmetrisch einsitzt.

9. Vorrichtung nach einem der Ansprüche 1-8, dadurch gekennzeichnet, daß der Ansatz (20) mit dem Kernelement (22) der Gurtaufwickelwelle (11) einstückig ist.

10. Vorrichtung nach Anspruch 9, dadurch gekennzeichnet, daß zwischen dem Ansatz (20) der Gurtaufwickelwelle (11) und dem radial auslenkbaren Sperrglied (16) wenigstens eine einander übergreifende Gestaltung (49) angeordnet ist, die derart wirkt, daß das Sperrglied (16) beim Blockieren seine vorgesehene Lage nicht in Achsrichtung der Gurtaufwickelwelle (11) verläßt.

11. Vorrichtung nach einem der Ansprüche 1-10, dadurch gekennzeichnet, daß das Sperrglied (16) und/oder der Druckring (19) Stanzteile sind.

12. Vorrichtung nach einem der Ansprüche 1-11, dadurch gekennzeichnet, daß die Lagerung (17) der Gurtaufwickelwelle (11) aus Kunststoff besteht.

## Claims

1. Take-up device for safety belts, in particular in motor vehicles, having a mechanism for the automatic blocking of a belt take-up shaft (11) in cases of accelerations on the belt strap (12) and/or device mount exceeding a limited value, including a ratchet member (16) being excentrically pivot-mounted on the belt take-up shaft (11) and being radially pivotable for interlocking via at least one ratchet tooth (37) with a detent elements (32) fixed to the housing, the ratchet member (16) in his blocking position interacting with a shoulder (20) of the belt take-up shaft (11) protruding into the plane of the ratchet member (16), characterised in that the ratchet member (16) has at least one predetermined breaking point (40a, 46) and the belt take-up shaft (11) and/or its bearing (17) is designed to be partially deformable for mechanical loads in the range of resistance limit of the predetermined breaking point (40a, 46) on the ratchet member (16).

2. Device according to Claim 1, characterised in that the belt take-up shaft (11) is made up of a deformable profiled body (23) on a rigid core element (22).

3. Device according to Claim 1 or 2, characterised in that the profiled body (23) is made of plastic and the core element (22) of metal.

4. Device according to one of Claims 1-3, characterised in that the shoulder (20) engages in a centre opening (50) of the ratchet member (16) and the ratchet member (16) has on its circumferential surface, in the region between the predetermined breaking point (46) and the, at least one, ratchet tooth (17) at a distance, seen in the belt withdrawal direction, from the first ratchet mechanism, at least one more ratchet tooth (47), which is additionally interlockable with the detent element (19, 31) fixed to the housing following severance of the predetermined breaking point (46) of the ratchet member (16).

5. Device according to one of Claims 1-3, characterised in that the shoulder (20) of the belt take-up shaft (11) has an opening or breakthrough (26) located in the bearing region of the ratchet member (16) and in which or through which the ratchet member (16), eccentrically borne on the profiled body (23), is guided.

6. Device according to Claim 5, characterised in that the ratchet member (16) has its predetermined breaking point (40a) on the part which is opposite the part on which the ratchet tooth (37), of which there is at least one, is arranged.

7. Device according to one of Claims 1-6, characterised in that the lateral limbs (20a, 20b) of the shoulder (20) have contact surfaces for the ratchet member (16) in its locking position.

8. Device according to one of Claims 1-7, characterised in that the core element (22) is a steel core having an elongated O profile, which is fitted axially symmetrically to the deformable profiled body (23) of the belt take-up shaft (11).

9. Device according to one of Claims 1-8, characterised in that the shoulder (20) is of a single piece with the core element (22) of the belt take-up shaft (11).

10. Device according to Claim 9, characterised in that between the shoulder (20) of the belt take-up shaft (11) and the radially deflectable ratchet member (16) at least one mutually overlapping shaping (49) is arranged, which has such an effect that the ratchet member (16) does not leave its intended position in the axial direction of the belt take-up shaft (11) when blocking.

11. Device according to one of Claims 1-10, characterised in that the ratchet member (16) and/or the thrust ring (19) are punched parts.

12. Device according to one of Claims 1-11, characterised in that the bearing (17) of the belt take-up shaft (11) is made of plastic.

## Revendications

1. Dispositif enrouleur pour ceintures de sécurité, notamment dans des véhicules automobiles, avec un système pour le blocage automatique d'un arbre enrouleur de ceinture (11) lors d'accélérations exercées sur la sangle de ceinture (12) et/ou sur le support de dispositif, qui dépassent une valeur limite, dans lequel un organe de blocage (16), monté excentriquement sur l'arbre enrouleur de ceinture (11) et pouvant être pivoté radialement vers l'extérieur pour s'engager dans une denture (32) solidaire du boîtier, coopère par au moins une dent de blocage (37), en position de blocage pivotée vers l'extérieur, avec un épaulement (20) de l'arbre enrouleur de ceinture (11) qui s'étend dans le plan de l'organe de blocage (16), caractérisé en ce que l'organe de blocage (16) présente au moins un point destiné à la rupture (40a,46), et l'arbre enrouleur de ceinture (11) et/ou son palier de montage (17) est configuré partiellement déformable pour des sollicitations mécaniques dans la région de la limite de résistance du point destiné à la rupture (40a, 46) de l'organe de blocage (16).

2. Dispositif selon la revendication 1, caractérisé en ce que l'arbre enrouleur de ceinture (11) est constitué par un corps profilé déformable (23) monté sur un élément central rigide (22).

3. Dispositif selon la revendication 1 ou 2, caractérisé en ce que le corps profilé (23) est réalisé en matière plastique, et l'élément central (22) est réalisé en métal.

4. Dispositif selon l'une des revendications 1 à 3, caractérisé en ce que l'épaulement (20) s'engage dans une ouverture centrale (50) de l'organe de blocage (16), et l'organe de blocage (16) présente sur sa face périphérique, dans la région comprise entre le point destiné à la rupture (46) et au moins la dent de blocage (17), à distance du premier système de blocage vu dans le sens d'extraction de la ceinture au moins une dent de blocage supplémentaire (47), qui peut être, en plus, verrouillée avec l'élément de crantage (19, 31) solidaire du boîtier à la suite de la séparation du point destiné à la rupture (46) de l'organe de blocage (16).

5. Dispositif selon l'une des revendications 1 à 3, caractérisé en ce que l'épaulement (20) de l'arbre enrouleur de ceinture (11) présente une ouverture ou ajour (26) qui se trouve dans la région du palier de montage de l'organe de blocage (16), dans laquelle ou à travers lequel est guidé l'organe de blocage (16) monté excentriquement sur le corps profilé (23).

6. Dispositif selon la revendication 5, caractérisé en ce que l'organe de blocage (16) présente son point destiné à la rupture (40a) sur la partie qui est opposée à la partie sur laquelle est disposée la ou les dents de blocage (37).

7. Dispositif selon l'une des revendications 1 à 6, caractérisé en ce que les branches latérales (20a, 20b) de l'épaulement (20) présentent des faces d'application pour l'organe de blocage (16) en position de verrouillage.

8. Dispositif selon l'une des revendications 1 à 7, caractérisé en ce que l'élément central (22) est un noyau en acier avec un profil en O oblong, qui est inséré en symétrie axiale dans le corps profilé déformable (23) de l'arbre enrouleur de ceinture (11).

9. Dispositif selon l'une des revendications 1 à 8, caractérisé en ce que l'épaulement (20) est réalisé en une pièce avec l'élément central (22) de l'arbre enrouleur de ceinture (11).

10. Dispositif selon la revendication 9, caractérisé en ce qu'au moins une configuration avec recouvrement mutuel (49) est réalisée entre l'épaulement (20) de l'arbre enrouleur de ceinture (11) et l'organe de blocage (16) déviable radialement vers l'extérieur, configuration qui agit de telle sorte que lors du blocage, l'élément de blocage (16) ne quitte pas sa position prévue dans le sens axial de l'arbre enrouleur de ceinture.

11. Dispositif selon l'une des revendications 1 à 10, caractérisé en ce que l'organe de blocage (16) et/ou la bague de pression (19) sont des pièces découpées.

12. Dispositif selon l'une des revendications 1 à 11, caractérisé en ce que le palier de montage (17) de l'arbre enrouleur de ceinture (11) est réalisé en matière plastique.

Fig.1

Fig.2

Fig.3

Fig. 4

Fig.5

4